# EUROPÄISCHE PATENTANMELDUNG

(11) **EP 0 652 448 A2**
(43) Veröffentlichungstag der Anmeldung: **10.05.1995**
(21) Anmeldenummer: 94117313.0
(22) Anmeldetag: 03.11.1994
(51) Int. Cl.: G01V 3/12

(54) **Verfahren zur bildgestützten Lageerfassung und Kartierung unterirdischer Objekte**

(30) Priorität: 10.11.1993 DE 4338280
(71) Anmelder: Daimler-Benz Aerospace Aktiengesellschaft, D-81663 München (DE)
(72) Erfinder: Lill, Ernst, Dr., D-81547 München (DE)

(57) **Zusammenfassung**

Bei einem Verfahren zur bildgestützten Lageerfassung und Kartierung unterirdischer oberflächennaher Objekte mit einem optischen Meßsystem und optischen Normkörpern sowie geophysikalische Sensoren zur Erfassung, Auswertung und Interpretation geophysikalischer Daten wird vorgeschlagen, daß ein mobiles Meßsystem (MS) mit einer hochgenauen Peilvorrichtung (PV) im Verbund mit einer präzisen Orientierungsplattform und optischen Normkörpern (ONK1 - ONKn) eine kontinuierliche, plangenaue und dreidimensionale oberirdische Lagebestimmung durchführt, wobei die relative Lage der Koordinatensysteme voll Peilvorrichtung (PV), optischen Normkörpern (ONK) und Trägerfahrzeug (TFZ) kontinuierlich mit hoher Genauigkeit erfaßt werden, die gleichzeitig präzise Lage von durch geophysikalische Sensoren erfaßten unterirdischen Objekten darstellt und sowohl die oberirdischen als auch die unterirdischen Objektdaten verzögerungsfrei einem Zentralrechner und einer Systemsteuerung zur Verarbeitung und Speicherung eingegeben und auf digitale Kartensysteme in entsprechendem Format übertragen und zur Ansicht gebracht werden.

## Beschreibung

Die Erfindung bezieht sich auf ein Verfahren zur bildgestützten Lageerfassung und Kartierung unterirdischer Objekte gemäß dem Oberbegriff des Anspruchs 1

Mit einem solchen Verfahren werden von einein Sensorsystem - wie beispielsweise Bodenradar - gelieferte Daten über Hindernisse, Leitungen, Schächte etc. in oberflächennahen Bereichen des Untergrundes zuverlässig und flächendeckend erfaßt und kartiert. Dies ist besonders in Ballungsräumen von tragender Bedeutung für die Neuplanung von Ver- und Entsorgungsleitungen und anderen unterirdischen Objekten. Derzeit wird diese Aufgabe typischerweise in mehreren zeitlich und örtlich getrennten Phasen durchgeführt. Zuerst wird der zu erkundende Bereich festgelegt, dann werden die geophysikalischen Daten in diesem Bereich erfaßt - vorzugsweise mittels Georadar - wobei die bodennahen Schichten abgetastet werden und schließlich erfolgt die Auswertung und Interpretation der gesammelten Daten. Da in innerstädtischen Bereichen aus technischen Gründen der Einsatz von GPS-Verfahren zur Koordinatenbestimmung des Meßsystems MS in aller Regel nicht möglich ist, wird diese Aufgabe mit herkömmlichen Methoden , d.h. unter hohem Zeitaufwand und lediglich von Zeit zu Zeit bewerkstelligt. Zwangsläufig sind im Falle von Interpretationsschwierigkeiten Zusatzmessungen erforderlich. Schließlich erfolgt die Kartierung der ermittelten Objekte. Dieses Verfahren nach dem Stand der Technik ist nicht nur zeitaufwendig und kostenintensiv, sondern auch noch erheblich fehlerträchtig.

Aus "Geophysics is here to stay" in The Oil and Gas Journal - Nov. 8, 1971, Seiten 81, 82, 84, ist ein Verfahren zur geophysikalischen Untersuchung des Meeresbodens mit Hilfe mehrerer Geosensoren und eines mit Satellitennavigation ausgerüsteten Schiffes bekanntgeworden.

Aus der US-PS 46 86 474 ist ein Verfahren zur Gewinnung geophysikalischer Daten aus der Luft bekannt, wobei die Positionsbestimmung des Luftfahrzeugs über eine Basisstation erfolgt.

Aus der DE 36 12 674 A1 ist ein geophysikalisches Daten-Gewinnungsverfahren bekannt, wobei die Positionsbestimmung über ein bordeigenes Satelliten-Navigationssystem erfolgt.

Ein Verfahren zur Feststellung eines Ortes mittels optischer Peilung ist beispielsweise aus der DE 43 12 599 A1 bekannt. Alle vorgenannten Vorveröffentlichungen des Standes der Technik sind nicht in der Lage, eine dreidimensionale Lagebestimmung verzögerungsfrei in vorhandene digitalisierte Kartensysteme zu übertragen.

Der vorliegenden Erfindung liegt die Aufgabe zugrunde, ein Verfahren der eingangs genannten Art und eine Einrichtung zur Durchführung desselben aufzuzeigen, mit dem die zuverlässige Klassifizierung sowie die lückenlose und plangenaue dreidimensionale Lagebestimmung von Objekten durchgeführt werden kann und außerdem die gewonnenen Erkenntnisse praktisch verzögerungsfrei in bestehende, digitalisierte Kartensysteme übertragen und im gewünschten Format gespeichert werden.

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung ist ein Ausführungsbeispiel erläutert und in den Figuren der Zeichnung skizziert, wobei diese die Erläuterungen ergänzen. Es zeigen:
- Fig. 1: ein Schaubild des gesamten Meßsystems im Einsatzbereich,
- Fig. 2: ein Blockschaltbild der einzelnen Systemfunktionen mit ihren Baugruppen in einem mobilen Meßsystem.

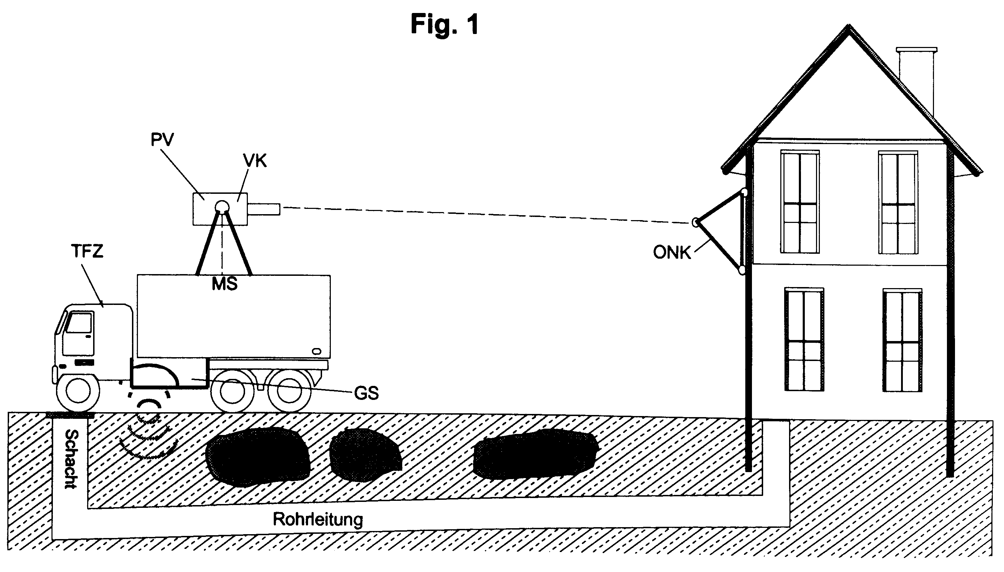

Am Beispiel eines mobilen Systems gemäß Fig. 1 soll die Erfindung erläutert werden. Dieses mobile Meßsystem ist mit unterschiedlichen geophysikalischen Sensoren und einer hochgenauen Peilvorrichtung PV ausgestattet. Die Peilvorrichtung besteht im wesentlichen aus einem Mastvisier mit integrierter, präziser Orientierungsplattform und einer Videokamera. Meßsystem MS und Peilvorrichtung PV sind miteinander in definierter Weise verbunden, wobei die Peilvorrichtung PV für eine Winkelauflösung - beispielsweise - von ca. 1 µrad ausgelegt ist. Diese Peilvorrichtung wird nun auf definiert gestaltete, dreidimensionale optische Normkörper ONK ausgerichtet, deren geometrische Strukturen genau bekannt sind. Derartige optische Normkörper sind beispielsweise durch die Anmelderin bereits bekanntgeworden und werden an kartografisch exakt vermessenen Punkten im Gelände angebracht und bezüglich eines vorgegebenen Koordinatensystems präzis ausgerichtet. Die relative Lage der Koordinatensysteme von Peilvorrichtung PV, optischen Normkörper ONK und Trägerfahrzeug TFZ wird kontinuierlich mit hoher Genauigkeit erfaßt. Die Videokamera VK ist mit einer Optik variabler Brennweite versehen, wobei das Abbildungsverhältnis zu jedem Zeitpunkt mit hoher Präzision erfaßt, optimiert und an eine Bildverarbeitungseinheit eingegeben wird. Weiterhin ist sichergestellt, daß sich zu jedem Zeitpunkt der Arbeitsvorgänge mindestens ein optischer Normkörper ONK im Sichtfeld der Peilvorrichtung befindet und so dieser Normkörper als optische Stützstelle für die Bildverarbeitung dient. Befindet sich zusätzlich zu einem optischen Normkörper ein erfaßbares dreidimensionales stationäres Objekt im Sichtfeld der Peilvorrichtung, so kann mittels bekannter Bildauswertungsalgorithmen auch dieses Objekt als eine weitere optische Stützstelle herangezogen werden, die ebenfalls dem Systemspeicher eingegeben wird. Da die Abbildungsdaten der Videokamera VK, ihre Orientierung bezüglich des mobilen Meßsystems MS ebenso wie die geometrische Auslegung des optischen Normkörpers ONK bekannt sind, werden aus den Bilddaten die genauen Ortskoordinaten des Meßsystems MS ermittelt. Das vorbeschriebene Verfahren ist vielseitig und auch für die Kartierung oberirdischer Objekte geeignet.

Die funktionalen Baugruppen des in Fig. 1 veranschaulichten mobilen Meßsystems MS sind - wie bereits erwähnt - einmal die Peilvorrichtung PV, die beispielsweise als sogenanntes Mastvisier ausgebildet ist und aus einer Videokamera VK mit Zoom-Optik und einem hochgenauen Winkelgeber besteht. Im Trägerfahrzeug TFZ befindet sich ein Zentralrechner mit einer Systemsteuerungseinheit (nicht gezeichnet) und eine Bedienungskonsole mit Monitor dient zur Darstellung der CAD-Karte, der georteten Objekte, sowie der vorgeschlagenen Erkundungswege und des Systemzustandes. Ferner weist das Meßsystem MS geophysikalische Sensoren auf, die einzeln oder im Verbund angeordnet sind, beispielsweise Georadar, elektrische Quadrupolmeßeinrichtung etc.

Die CAD-Karte dient als Orientierungsgrundlage und Basis zum Eintragen der lokalisierten und klassifizierten Objekte. Bildverarbeitung und Zielverfolgung liefern die Koordinaten des MS und optimieren den Einsatz der Peilvorrichtung. Letztlich erfolgt die CAD-Kartierung der lokalisierten und klassifizierten Objekte.

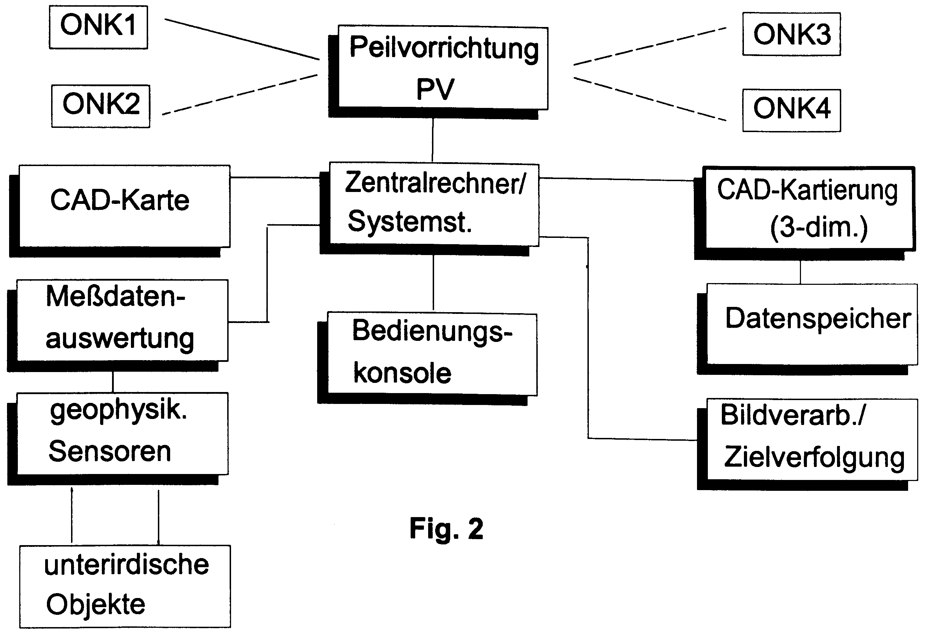

Das in Fig. 2 gezeigte mobile Meßsystem veranschaulicht die vorgenannten Baugruppen und ihre Funktionen zum Zeitpunkt des Meß-Startes. Die optischen Normkörper ONK1 bis ONK4 sind stationär so im Gelände angeordnet, daß zu jedem Zeitpunkt der Messungen die Sichtverbindung zu mindestens einem Normkörper ONK sichergestellt ist. Es versteht sich, daß die Anzahl der anzuordnenden Normkörper geländeabhängig etc. ist. Als erstes werden die Koordinaten und die Orientierung des Normkörpers ONK1 präzise vermessen. Das Mastvisier mit integrierter Bildaufnahmekamera VK ist auf ONK1 ausgerichtet, die optische Abbildung ist so eingestellt, daß dessen Abbildung einen erheblichen Teil (z. B. 70 %) des verfügbaren Bildformats ausfüllt. Damit wird eine hohe Meßgenauigkeit des Verfahrens erzielt. Bekanntermaßen kann der ONK beispielsweise als Pyramide ausgeführt sein. Aufgrund der verfügbaren Daten bezüglich Abbildungseigenschatten der Bildaufnahmekamera VK, der präzisen Kenntnis der ONK1 -Koordinaten, der ONK1 -Geometrie und der ONK1-Orientierung, ergibt sich für das mobile Meßsystem MS die exakte Bestimmung der Standortkoordinaten und seine genaue Orientierung bezüglich ONK1.

Alternativ zu diesen Startbedingungen kann zunächst der Standort des mobilen Meßsystems MS und die Ausrichtung der Orientierungsplattform exakt ermittelt werden. Die Ausrichtung und die Koordinaten des ONK1 müssen in diesem Fall nicht erfaßt sein. Zweckmäßigerweise wird als Startpunkt für das Meßsystem beim Erkunden von Leitungsstraßen ein Bereich leicht erkennbarer Verhältnisse - beispielsweise ein Schacht - gewählt werden. Hier sind Art und Lage zumindest einiger Leitungen erkennbar, die Erfassung der gewünschten Daten wird dadurch erleichtert und die Lernfähigkeit des Meßsystems erheblich unterstützt.

Aufgrund der verfügbaren, digitalisierten Umgebungskarte wird dem mobilen Meßsystem MS ein optimiertes Bewegungsmuster vorgegeben, das über den Monitor der Steuerkonsole dem Bediener des Meßsystems MS angezeigt wird. In einem weiteren Ausführungsbeispiel kann eine teilautomatisierte Fortbewegung des mobilen Meßsystems MS durchgeführt werden. Bewegt sich nun dieses Meßsystem, so verändern sich sowohl die Distanz zum ONK1 als auch der Aspektwinkel dazu. Da sowohl die Abbildungseigenschaften der Bildaufnahmekamera VK, als auch die geometrischen Abmessungen des ONK1 genau erfaßt sind, kann aus diesen Änderungen mittels der Bildverarbeitungsalgorithmen - wie bereits erwähnt - der Bewegungsablauf des mobilen Meßsystems MS mit hoher Präzision und kontinuierlich errechnet werden. Entsprechend der lokalen Gegebenheiten kann die Bildaufnahmekamera VK der Peilvorrichtung PV bei Bedarf unterschiedlich plazierte optische Normkörper anpeilen. Die Neupeilung erfolgt im Stand des mobilen Meßsystems MS entweder manuell oder - gestützt auf eine gespeicherte Vorerkundung - automatisch.

Zeitgleich zur Fortbewegung des Trägerfahrzeuges TFZ erkunden die geophysikalischen Sensoren GS kontinuierlich den Untergrund nach Leitungen, Kanälen und anderen Objekten. Die anfallenden Daten werden erfaßt, ausgewertet, auf dein Monitor kartographisch eingeordnet und gespeichert. Die so erzielten Ergebnisse sind entsprechend einschlägiger Bestimmungen auf digitalen Speichermedien zu archivieren und werden nach üblichen Methoden der digitalen Bildverarbeitung weiterverarbeitet. Sollten jedoch Meßergebnisse für eine eindeutige Objektklassifizierung oder die genaue Lagebestimmung in einzelnen Fällen nicht ausreichen, so erteilt der Systemrechner über die Bedienungskonsole Empfehlungen für das weitere Vorgehen, wie beispielsweise zusätzliche Erkundungsbewegungen, Erhöhung der Meßempfindlichkeit oder veränderte Abtastraten.

## Patentansprüche

1. Verfahren zur bildgestützten Lageerfassung und Kartierung unterirdischer oberflächennaher Objekte mit einem optischen Meßsystem und optischen Normkörpern sowie geophysikalische Sensoren zur Erfassung, Auswertung und Interpretation geophysikalischer Daten, dadurch gekennzeichnet, daß ein mobiles Meßsystem (MS) mit einer hochgenauen Peilvorrichtung (PV) im Verbund mit einer präzisen Orientierungsplattform und optischen Normkörpern (ONK1 - ONKn) eine kontinuierliche, plangenaue und dreidimensionale oberirdische Lagebestimmung durchführt, wobei die relative Lage der Koordinatensysteme von Peilvorrichtung (PV), optischen Normkörpern (ONK) und Trägerfahrzeug (TFZ) kontinuierlich mit hoher Genauigkeit erfaßt werden, die gleichzeitig präzise Lage von durch geophysikalische Sensoren erfaßten unterirdischen Objekten darstellt und sowohl die oberirdischen als auch die unterirdischen Objektdaten verzögerungsfrei einem Zentralrechner und einer Systemsteuerung zur Verarbeitung und Speicherung eingegeben und auf digitale Kartensysteme in entsprechendem Format übertragen und zur Ansicht gebracht werden.

2. Verfahren nach Anspruch 1, **dadurch gekennzeichnet,** daß die variablen Abbildungsverhältnisse der Peilvorrichtung (PV) zu jedem Zeitpunkt mit hoher Präzision erfaßt, optimiert und an eine Bildverarbeitungseinheit übermittelt werden.

3. Verfahren nach Anspruch 1 oder 2, **dadurch gekennzeichnet,** daß zu jedem Zeitpunkt des Meßvorganges mindestens ein optischer Normkörper (ONK) im Sichtfeld der Peilvorrichtung (PV) liegt und dem Meßsystem ein optimiertes, in einem Monitor sichtbares Bewegungsmuster vorgegeben wird

4. Verfahren nach einem der Ansprüche 1 bis 3, **dadurch gekennzeichnet,** daß die zeitgleich zur Fortbewegung des Trägerfahrzeugs lokalisierten und klassifizierten unterirdischen Objekte maßstabsgenau in CAD-Karten eingetragen und auf einem Monitor zur Ansicht gebracht werden.

5. Einrichtung zur bildgestützten Lageerfassung und Kartierung unterirdischer oberflächennaher Objekte mit einem optischen Meßsystem und optischen Normkörpern sowie Geosensoren zur Erfassung, Auswertung und Interpretation geophysikalischer Daten, **dadurch gekennzeichnet,** daß auf einem Trägerfahrzeug (TFZ) eine zu optischen Normkörpern (ONK) gerichtete Peilvorrichtung (PV), bestehend aus einer Bildaufnahmekamera mit Zoom-Optik (VK) und einer hochgenauen Orientiertungsplattform, angeordnet ist, die mit einem Zentralrechner und einer Systemsteuereinheit in Verbindung steht, sowie einzelne oder im Verbund geschaltete geophysikalische Sensoren systemgerecht angebracht sind und eine Bedienungskonsole mit Monitor zur Darstellung von CAD-Karten, der georteten Objekte sowie der vorgeschlagenen Erkundungswege und des Meßsystemzustandes integriert ist.

6. Einrichtung nach Anspruch 5, **dadurch gekennzeichnet,** daß die Peilvorrichtung für eine Winkelauflösung von ca.1 µrad ausgelegt ist und als Mastvisier mit integrierter Bildaufnahmekamera ausgebildet ist.

7. Einrichtung nach Anspruch 5 oder 6, **dadurch gekennzeichnet,** daß die Bildaufnahmekamera (VK) eine Videokamera mit einer Optik variabler Brennweite ist.
